# EUROPEAN PATENT SPECIFICATION

(11) **EP 2 818 711 B1**
(45) Date of publication and mention of the grant of the patent: **14.08.2019**
(21) Application number: 14169571.8
(22) Date of filing: 23.05.2014
(51) Int. Cl.: F04B 35/04, H02K 33/16

(54) **LINEAR COMPRESSOR**
LINEARER VERDICHTER
COMPRESSEUR LINÉAIRE

(30) Priority: 28.06.2013 KR 20130075512; 28.06.2013 KR 20130075514; 04.10.2013 KR 20130118462
(43) Date of publication of application: 31.12.2014
(73) Proprietor: LG Electronics Inc., Yeongdeungpo-gu Seoul 150-721 (KR)
(72) Inventor: Jeong, Sangsub, 153-802 Seoul (KR); Kang, Kyoungseok, 153-802 Seoul (KR); Jung, Wonhyun, 153-802 Seoul (KR); Roh, Chulgi, 153-802 Seoul (KR); Byun, Jeonguk, 153-802 Seoul (KR); Kim, Jookon, 153-802 Seoul (KR); Yoon, Sunki, 153-802 Seoul (KR)
(74) Representative: Vossius & Partner Patentanwälte Rechtsanwälte mbB

(56) References cited:
- CN-A- 1 508 427
- KR-B1- 100 792 460
- US-A- 6 097 125
- US-A1- 2004 145 248

## Description

### BACKGROUND

The present disclosure relates to a linear compressor.

In general, compressors may be mechanisms that receive power from power generation devices such as electric motors or turbines to compress air, refrigerants, or other working gases, thereby increasing a pressure of the working gas. Compressors are being widely used in home appliances or industrial machineries such as refrigerators and air-conditioners.

Compressors may be largely classified into reciprocating compressors in which a compression space for suctioning or discharging a working gas is defined between a piston and a cylinder to compress a refrigerant while the piston is linearly reciprocated within the cylinder, rotary compressors in which a compression space for suctioning or discharging a working gas is defined between a roller that is eccentrically rotated and a cylinder to compress a refrigerant while the roller is eccentrically rotated along an inner wall of the cylinder, and scroll compressors in which a compression space for suctioning or discharging is defined between an orbiting scroll and a fixed scroll to compress a refrigerant while the orbiting scroll is rotated along the fixed scroll.

In recent years, among the reciprocating compressors, linear compressors having a simple structure in which the piston is directly connected to a driving motor, which is linearly reciprocated, to improve compression efficiency without mechanical loss due to switching in moving are being actively developed.

Generally, such a linear compressor is configured to suction and compress a refrigerant while a piston is linearly reciprocated within a cylinder by a linear motor in a sealed shell, thereby discharging the compressed refrigerant. A conventional linear compressor is shown e.g. in US-6097125-A.

The linear motor has a structure in which a permanent magnet is disposed between an inner stator and an outer stator. Here, the permanent magnet may be linearly reciprocated by a mutual electromagnetic force between the permanent magnet and the inner (or outer) stator. Also, since the permanent magnet is operated in a state where the permanent magnet is connected to the piston, the refrigerant may be suctioned and compressed while the piston is linearly reciprocated within the cylinder and then be discharged.

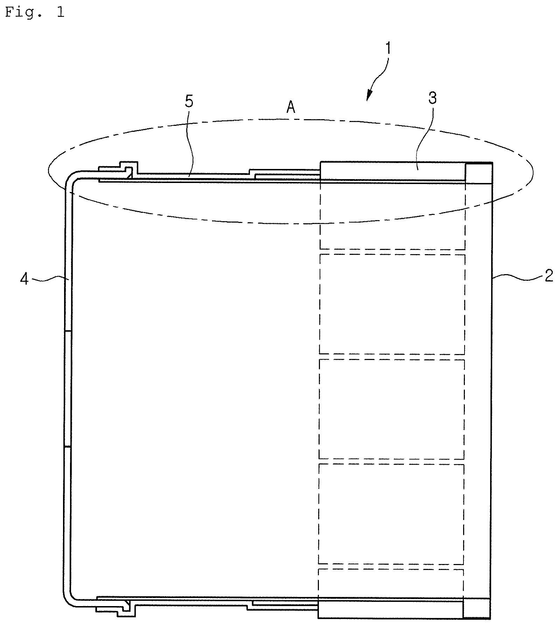

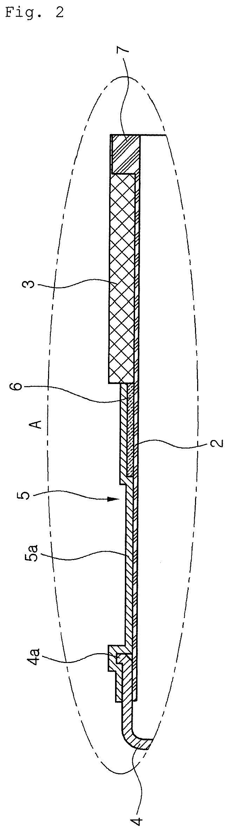

Figs. 1 and 2 illustrate configurations of magnet assembly 1 in a typical linear compressor. The magnet assembly 1 includes a magnet frame 2 having an approximate cylinder shape and delivering a driving force exerted by a linear motor to a piston, and a permanent magnet 3 fixed on the outer circumference of the magnet frame 2.

The magnet assembly 1 further includes a coupling plate 4 coupled to one end portion of the magnet frame 2. The coupling plate 4 may be disposed to cover an open end portion of the magnet frame 2.

The piston may be coupled to the coupling plate 4. In addition, the piston is coupled to the coupling plate 4 and extending inside the magnet frame 2. When the linear motor is driven, the permanent magnet 3, the magnet frame 2, the coupling plate 4 and piston are integrally reciprocated.

On the outer circumference of the magnet frame 2, the permanent magnet 3, a plurality of supporting members 6 and 7 supporting both sides of the permanent magnet 3, and a fixing member 5 coupling the permanent magnet 3 to the coupling plate 4 are provided. The plurality of supporting member 6 and 7 include a first supporting member 6 supporting one side of the permanent magnet 3 and a second supporting member 7 supporting the other side.

The permanent magnet 3 is disposed between the first and second supporting members 6 and 7. In addition, the first supporting member 6 may be positioned between the permanent magnet 3 and a flange part 4a of the coupling plate 4.

In detail, the coupling plate 4 may have a bent shape to cover at least a part of the outer circumference of the magnet frame 2 with the open end portion of the magnet frame 2 covered. The coupling plate 4 includes the flange part 4a forming one end portion of the coupling plate 4 and separately disposed from the permanent magnet 3 or the first supporting member 6.

The fixing member 5 is configured to cover the first supporting member 6 and the flange part 4a of the coupling plate 4.

Furthermore, the supporting member 5 includes a connection part 5a coupled to the outer circumference of the magnet frame 2. It may be understood that the connection part 5a is a part of the fixing member 5 disposed between the permanent magnet 3 and the coupling plate 4.

On the other hand, the permanent magnet 3 may be made of a rare-earth magnet (neodymium magnet or ND magnet). The ND magnets have very large magnetic flux density. In addition, since the coupling plate 4 is made of magnetic material, the magnetic flux density generated from the ND magnets may have tendency to leak to outside through the coupling plate 4.

Accordingly, in order to prevent the magnetic flux generated by the ND magnet from leaking outside through the coupling plate 4, the permanent magnet 3 is disposed from the flange part 4a of the coupling plate 4 by a predetermined distance. In addition, as shown in Fig. 2, the connection part 5a may be positioned at a part that the flange part 4a is separated from the permanent magnet 3.

In such a way, in case where the coupling plate 4 is separately disposed from the permanent magnet 3 and the fixing member 5 is disposed between them, the fixing member 5 or the coupling plate 4 may be damaged in a process that the permanent magnet 3 and the coupling plate 4 are reciprocated from side to side.

In particular, in the process that the permanent magnet 3 and the coupling plate 4 are reciprocated, compressive force and tensile force are applied to the connection part 5a of the fixing member 5 and the action of the forces are repeated. Accordingly, the strength of the connection part 5a becomes weakened and accordingly the connection part 5a becomes damaged. When the connection part 5a is damaged, the coupling plate 4 becomes also damaged due to interference between the permanent magnet 3 and the coupling plate 4.

Furthermore, in order to address the above described limitations, a scheme for reducing the size of the connection part 5a, in particular, a scheme for increasing the length or the size of the permanent magnet 3 are considered. However, the ND magnet is very expensive and the schemes are very restrictive.

In case of reducing the size of the connection part 5a by reducing a distance between the permanent magnet 3 and the coupling plate 4, the leaked amount of the magnetic flux increases and then efficiency of the compressor becomes lowered.

### SUMMARY

Embodiments provide a linear compressor having improved compressing efficiency and reliability.

In one embodiment, a linear compressor includes: a shell in which a refrigerant suction part is disposed; a cylinder provided inside the shell; a piston reciprocating inside the cylinder; a motor assembly providing a driving force for movement of the piston; and a magnet assembly delivering the driving force exerted by the motor assembly to the piston, wherein the magnet assembly includes: a magnet frame having a cylinder shape; a permanent magnet installed in the magnet frame; and a coupling plate coupled one side of the magnet frame and including a flange part coupled to an end portion of the permanent magnet.

The coupling plate may further includes a piston coupling part coupled to the piston; and a side extension part extending from the piston coupling part and laid on an outer circumference of the magnet frame.

The flange part may be bent perpendicularly in an outer radial direction of the frame from the side extension part.

The flange part may include a contact part coupled to an end portion of the permanent magnet.

The linear compressor may further include a fixing member coupled to the permanent magnet and coupling plate.

The permanent magnet may include a first surface coupled to an outer circumference of the magnet frame; and a second surface disposed in a direction opposite to the first surface.

The side extension part may include a coupling surface coupled to the outer circumference of the magnet frame, and the coupling surface and the first surface of the permanent magnet are formed on the outer circumference of the magnet frame.

A virtual surface from which the coupling surface extends may form an identical surface to a virtual surface that the first surface of the permanent magnet extends.

A surface passing through an end portion of the flange part and the second surface of the permanent magnet may be formed on an inner surface of the fixing member.

A virtual surface from which the end portion of the flange part extends may form an identical surface to a virtual surface that the second surface of the permanent magnet extends.

The fixing member may include a plurality of first fixing members coupled to both sides of the coupling plate; and a second fixing member coupled to at least poriton of the plurality of first fixing members and the permanent magnet.

The plurality of first fixing members may include a first member coupled between the magnet frame and the side extension part of the coupling plate; and a second member coupled between an outer surface of the side extension part and the second fixing member.

The linear compressor may further include: a first boundary surface forming a coupling surface of the first member with the magnet frame; and a second boundary surface forming a coupling surface of the second fixing member with a part coupled to the end portion of the flange part of the second member.

A virtual surface from which the first boundary surface extends and a virtual surface from which the first surface of the permanent magnet extends may form an identical surface.

A virtual surface from which the second boundary surface extends and a virtual surface from which the second surface of the permanent magnet extends may form an identical surface.

The linear compressor may further include an intermediate supporting member intervened between the permanent magnet and the flange part of the coupling plate and having a plate shape.

The linear compressor may further include a fixing member coupled to the permanent magnet and the coupling plate, wherein the intermediate supporting member extends from the magnet frame towards the fixing member.

The permanent magnet may be made of a ferrite-based material.

The coupling plate may be made of a stainless steel-based material.

The details of one or more embodiments are set forth in the accompanying drawings and the description below. Other features will be apparent from the description and drawings, and from the claims.

### BRIEF DESCRIPTION OF THE DRAWINGS

Figs. 1 and 2 are cross-sectional views illustrating a configuration of a magnet assembly in a typical linear compressor.
Fig. 3 is a cross-sectional view illustrating an internal configuration of a linear compressor according to an embodiment.
Fig. 4 is an exploded perspective view illustrating a configuration of a driving device for a linear compressor according to an embodiment.
Fig. 5 is a perspective view illustrating a magnet assembly of a linear compressor according to a first embodiment.
Fig. 6 is a cross-sectional view taken along line I-I' of Fig. 5.
Fig. 7 is a cross-sectional view that a portion "B" of Fig. 6 is enlarged.
Fig. 8 is a cross-sectional view illustrating a configuration of a magnet assembly according to a second embodiment.
Fig. 9 is view illustrating a configuration of a magnet assembly according to an example not falling within the scope of the invention.

### DETAILED DESCRIPTION OF THE EMBODIMENTS

Reference will now be made in detail to the embodiments of the present disclosure, examples of which are illustrated in the accompanying drawings.

A linear assembly according to an embodiment will be described in detail with reference to the accompanying drawings. The invention may, however, be embodied in many different forms and should not be construed as being limited to the embodiments set forth herein; rather, the scope of the present invention is solely limited by the appended claims.

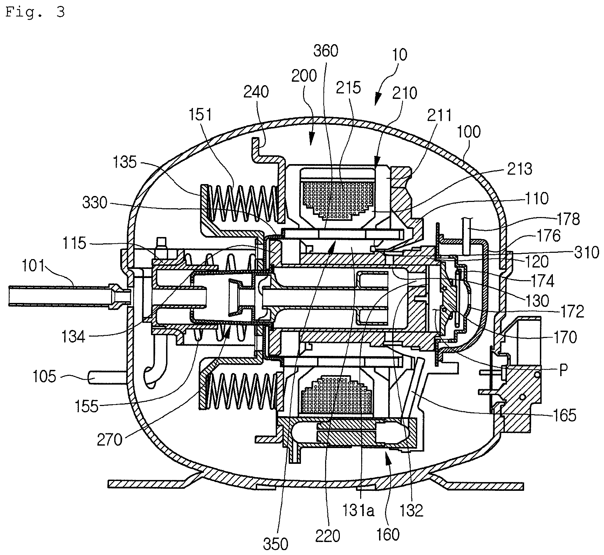

Fig. 3 is a cross-sectional view illustrating an inner configuration of a linear compressor according to an embodiment.

Referring to Fig. 3, the linear compressor 10 according to an embodiment includes a cylinder 120 disposed in a shell 100, a piston 130 linearly reciprocating inside the cylinder 120, and a motor assembly 200 which is a linear motor exerting a driving force on the piston 130. The shell 100 may be configured by combination of an upper shell and a lower shell.

The cylinder 120 may be made of a nonmagnetic material such as an aluminum-based material (aluminum or aluminum alloy)

Since the cylinder 120 is made of the aluminum-based material, the magnetic flux generated in the motor assembly 200 is delivered to the cylinder 120, thereby preventing the magnetic flux from being leaked to the outside of the cylinder 120. The cylinder 120 may be formed by extruded rod processing.

The piston 130 may be made of an aluminum-based material (aluminum or aluminum alloy), which is a nonmagnetic material. Since the piston 130 is made of the aluminum-based material, a phenomenon that the magnetic flux generated from the motor assembly 200 is delivered to the piston 130 and leaked outside the piston 130 can be preventable. In addition, the piston 130 may be formed by a forging method.

In addition, the cylinder 120 and the piston 130 may have the same material composition ratio, that is, type and composition ratio. The piston 130 and the cylinder 120 are made of the same material (aluminum), and thus have the same thermal expansion coefficient. During operation of the linear compressor 10, a high-temperature environment (about 100 °C) is created in the shell 100. At this time, the piston 130 and the cylinder 120 have the same thermal expansion coefficient, and may thus have the same amount of thermal deformation.

Eventually, since the piston 130 and the cylinder 120 are thermally deformed in different amounts or directions, it is possible to prevent interference with the cylinder 120 during movement of the piston 130.

The shell 100 includes a suction part 101 into which a refrigerant is flowed and a discharge part 105 from which a refrigerant compressed inside the cylinder 120 is discharged.

The refrigerant suctioned through the suction part 101 flows into the piston 130 via a suction muffler 270. In a process that the refrigerant passes through the suction muffler 270, noise having various frequencies can be reduced.

A compression space P for compressing the refrigerant by the piston 130 is defined in the cylinder 120. A suction hole 131a through which the refrigerant is introduced into the compression space P is defined in the piston 130, and a suction valve 132 selectively opening the suction hole 131a is disposed at one side of the suction hole 131a.

A discharge valve assembly 170, 172 and 174 for discharging the refrigerant compressed in the compression space P is disposed at one side of the compression space P. That is, it is understood that the compression space P is formed between one end of the piston 130 and the discharge valve assembly 170, 172 and 174.

The discharge valve assembly 170, 172 and 174 includes a discharge cover 172 in which a discharge space of the refrigerant is defined; a discharge valve 170 which is opened and introduces the refrigerant into the discharge space when the pressure of the compression space P is not less than a discharge pressure; and a valve spring 174 is disposed between the discharge valve 170 and the discharge cover 172 to exert an elastic force in an axial direction. Here, it can be understood that the "axial direction" used herein is a direction in which the piston linearly reciprocates, that is, a horizontal direction in Fig. 3.

The suction valve 132 may be disposed at one side of the compression space P, and the discharge valve 170 may be disposed at the other side of the compression space P, that is, at an opposite side of the suction valve 132.

While the piston 130 linearly reciprocates inside the cylinder 120, the suction valve 132 is opened to allow the refrigerant to be introduced into the compression space P when the pressure of the compression space P is lower than the discharge pressure and not greater than a suction pressure. On the contrary, when the pressure of the compression space P is not less than the suction pressure, the refrigerant of the compression space P is compressed in a state where the suction valve 132 is closed.

If the pressure of the compression space P is the discharge pressure or more, the valve spring 174 is deformed to open the discharge valve 170 and the refrigerant is discharged from the compression space P into the discharge space of the discharge cover 172.

The refrigerant of the discharge space flows into a loop pipe 178 via the discharge muffler 176. The discharge muffler 176 may reduce flow noise of the compressed refrigerant, and the loop pipe 178 guides the compressed refrigerant to a discharge part 105. The loop pipe 178 is coupled to the discharge muffler 176 and curvedly extends to be coupled to the discharge part 105.

The linear compressor 10 further includes a frame 110. The frame 110, which is a member of fixing the cylinder 120, may be integrally formed with the cylinder 120 or may be coupled to the cylinder 120 by means of a separate fastening member. The discharge cover 172 and the discharge muffler 176 may be coupled to the frame 110.

The motor assembly 200 includes an outer stator 210 fixed to the frame 110 and disposed so as to surround the cylinder 120, an inner stator 220 disposed apart from the inside of the outer stator 210, and a permanent magnet 350 disposed in a space between the outer stator 210 and the inner stator 220.

The permanent magnet 350 may linearly reciprocate due to mutual electromagnetic force with the outer stator 210 and the inner stator 220. The permanent magnet 350 includes a plurality of tri-pole magnets and may be made of a relatively cheap ferrite-based material.

The permanent magnet 350 is disposed on the outer circumference of the magnet frame 310 of the magnet assembly 300. One end portion of the permanent magnet 350 contacts with the coupling plate 330, and the permanent magnet 350 and the coupling plate 330 may be coupled by the fixing member 360.

The coupling plate 330 may be made of a nonmagnetic material, for example, stainless steel.

The coupling plate 330 covers open one end portion of the magnet frame 310 and may be coupled to the flange 134 of the piston 130. For example, the coupling plate 330 and the flange 134 may be bolt-coupled. It may be understood that the flange 134 has a configuration that extends in a radial direction from an end portion of the piston 130.

As the permanent magnet 350 linearly moves, the piston 130, the magnet frame 310 and the coupling plate 330 may linearly reciprocate in an axial direction with the permanent magnet 350.

The outer stator 210 includes a coil-wound body 213 and 215 and a stator core 211.

The coil-wound body 213 and 215 includes a bobbin 213 and a coil 215 wound in a circumferential direction of the bobbin 213. The coil 215 may have a polygonal section, for example, a hexagonal section.

The stator core 211 is provided such that a plurality of laminations are stacked in a circumferential direction, and may be disposed to surround the coil-wound body 213 and 215.

When a current is applied to the motor assembly 200, the current flows through a coil 215, a magnetic flux is formed around the coil 215 due to the current flowing through the coil 215, and the magnetic flux flows while a closed loop is formed along the outer stator 210 and the inner stator 220.

The magnetic flux flowing along the outer stator 210 and the inner stator 220 and a magnetic flux from the permanent magnet 350 may interact with each other and generate a force for moving the permanent magnet 350.

A state cover 240 is disposed at one side of the outer stator 210. One end of the outer stator 210 may be supported by the frame 110, and the other end thereof may be supported by the stator cover 240.

The inner stator 220 is fixed to the outer circumference of the cylinder 120 inside the magnet frame 310. The inner stator 220 is configured such that a plurality of laminations are stacked at an outer side of the cylinder 120 in a circumferential direction.

The linear compressor 10 further includes a supporter 135 supporting the piston 130, and a back cover 115 extending toward the suction part 101 from the piston 130. The back cover 115 may be disposed to cover at least a portion of the suction muffler 140.

The linear compressor 10 includes a plurality of springs 151 and 155 which are elastic members and have each natural frequency adjusted so as to allow the piston 130 to perform resonant motion.

The plurality of springs 151 and 155 include a first spring 151 supported between the supporter 135 and the stator cover 240, and a second spring 155 supported between the supporter 135 and the back cover 115. The moduli of elasticity of the first and second springs 151 and 155 may be the same.

The first spring 151 may be provided in plurality at top and bottom sides of the cylinder 120 or piston 130, and the second spring 155 may be provided in plurality at the front of the cylinder 120 or piston 130.

Here, it can be understood that the term "front" used herein means a direction oriented toward the inlet 101 from the piston 130. That is, it can be understood that 'rear' means a direction oriented toward the discharge valve assembly 170, 172 and 174 from the inlet 101. This term may also be equally used in the following description.

A predetermined amount oil may be stored on an inner bottom surface of the shell 100. An oil supply device 160 for pumping an oil may be provided in a lower portion of the shell 100. The oil supply device 160 is operated by vibration generated according to linear reciprocating motion of the piston 130 to thereby pump the oil upward.

The linear compressor 10 further includes an oil supply pipe 165 guiding the flow of the oil from the oil supply device 160. The oily supply pipe 165 may extend from the oil supply device 160 to a space between the cylinder 120 and the piston 130.

The oil pumped from the oil supply device 160 is supplied to the space between the cylinder 120 and the piston 130 via the oil supply pipe 165, and performs cooling and lubricating operations.

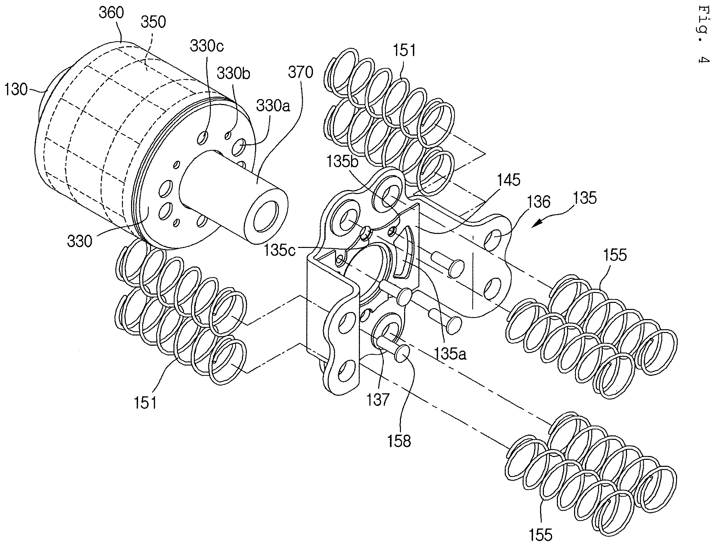

Fig. 4 is an exploded perspective view illustrating a configuration of a driving device of a linear compressor according to an embodiment.

Referring to Fig. 4, the driving device of linear compressor according to the embodiment includes a piston 130 disposed to possibly reciprocate inside a cylinder 120, a coupling plate 330 coupled to the piston 130, and a permanent magnet 350 contact-coupled to one end portion of the coupling plate 330.

In addition, the driving device includes a fixing member 360 disposed to surround an outer side of the permanent magnet 350 and coupled to the coupling plate 330. The fixing member 360 and the magnet frame 310 may be made of a mixture of a glass fiber or a carbon fiber, and a resin. The fixing member 360 may maintain a coupled state of the permanent magnet 350 and the coupling plate 330 durable.

Inside the coupling plate 330, a piston guide (not shown) is provided which is coupled to the flange 134 of the piston 130. The piston guide may be intervened between the flange 134 and the inner surface of the coupling plate 330. The piston 130 and the flange 134 are totally referred to as "piston assembly".

In the outer side of the coupling plate 330, namely, in the front of the coupling plate 330, a supporter 135 is provided which is for supporting the piston assembly to be movable. The supporter 135 may be elastically supported inside the linear compressor 10 by springs 151 and 155.

The supporter 135 includes a plurality of spring seat parts 136 and 137 to which the springs 151 and 155 are coupled.

In detail, the plurality of spring seat parts 136 and 137 include a plurality of first spring seat parts 136 into which end portions of the first springs 151 are seated. The plurality of first spring seat parts 136 may be respectively provided to top and bottom portions of the supporter 135.

For example, two first spring seat parts 136 are provided to the top portion of the supporter 135 and the two first spring seat parts 136 are provided to the bottom portion of the supporter 135. Accordingly, one end portions of the two first springs 151 are coupled to the top portion of the supporter 135 and one end portions of the other two first springs 151 are coupled the bottom portion of the supporter 135.

Furthermore, the other end portions of the four first springs 151 are coupled to a stator cover 240 provided to top and bottom sides of the supporter 135. The supporter 135 is subjected to force or load from the stator cover 240 due to the plurality of the first springs 151.

The plurality of spring seat parts 136 and 137 include a plurality of second spring seat parts 137 into which end portions of the second springs 155 are seated. The plurality of second spring seat parts 137 may be provided to right and left portions of the supporter 135.

For example, two second spring seat parts 137 are provided to the left portion of the supporter 135 and two second spring seat parts 137 are provided to the right portion of the supporter 135. Accordingly, one end portions of the two second springs 155 are coupled to the left portion of the supporter 135 and one end portions of the other two second springs 155 are coupled to the right portion of the supporter 135.

Furthermore, the other end portions of the four second springs 155 are coupled to a back cover 115 provided to the front of the piston 130. The supporter 135 is subjected to force or load towards the rear from the back cover 115 due to the plurality of the second springs 155. Since the moduli of elasticity of the first and second springs 151 and 155 are the same, the magnitude of a force acted by the four second springs 155 may be similar to the magnitude of a force acted by the four first springs 151.

The supporter 135 has a plurality of coupling holes 135b and 135c to which fastening members 158 are coupled. The plurality of coupling holes 135b and 135c include a plurality of supporter fastening holes 135b and a plurality of supporter assembly holes. The plurality of supporter fastening holes 135b may be formed in the top and bottom portions of the supporter 135 and the plurality of supporter assembly holes 135c may be formed in the right and left portions of the supporter 135.

For example, two supporter fastening holes 135b may be formed in the top portion and the other two may be formed in the bottom portion. The supporter assembly holes 135c may be respectively formed in the right and left portions by one. In addition, the supporter fastening holes 135b and the supporter assembly holes 135c may have different sizes from each other.

The coupling plates 330, the piston guide and the flange 134 of the piston assembly may have coupling holes formed in correspondence with the plurality of holes 135b and 135c. The fastening member 158 may penetrate the coupling holes and be coupled to the coupling plate 330, the piston guide, and the flange 134.

For example, in the coupling plate 330, connection member fastening holes 330b and connection member assembly holes 330c may be formed which respectively correspond to the supporter fastening holes 135b and the supporter assembly holes 135c.

On the other hand, supporter communication holes 135a are formed in the supporter 135 in order to reduce resistance of flow of a gas existing inside the linear compressor 10. The supporter communication holes 135a are formed with at least a part of the supporter 135 being cut and respectively formed in the top and bottom portions.

In addition, communication holes corresponding to the supporter communication holes 135a are respectively formed in the coupling plate 330, the piston guide, and the flange 134 of the piston assembly. For example, the coupling plate 330 may have connection member communication holes 330a corresponding to the supporter communication holes 135a in the coupling plate 330a. The gas flows through the communication holes formed in the coupling plate 330, the piston guide, the flange 134 and the supporter 135 and accordingly the gas flow resistance can be reduced.

The driving device includes a balance weight 145 coupled to the supporter 135 and reducing vibration occurring in a driving process of the driving device. The balance weight 145 may be coupled to the front surface of the supporter 135.

In the balance weight 145, a plurality of weight fastening holes corresponding to the supporter fastening holes 135b and weight communication holes corresponding to the supporter communication holes 135a are formed. The balance weight 145 may be coupled to the supporter 135, the coupling plate 330, and the flange 300 of the piston due to the fastening member 158.

The driving device further includes a suction muffler 270 for reducing flow noise of a refrigerant. The suction muffler 270 may penetrate through the supporter 135, the balance weight 145, the coupling plate 330 and the flange 134 of the piston to extend to inside the cylinder 120 and the piston 130. In addition, at least a part of the suction muffler 270 may be intervened and fixed between the flange 134 and the piston guide.

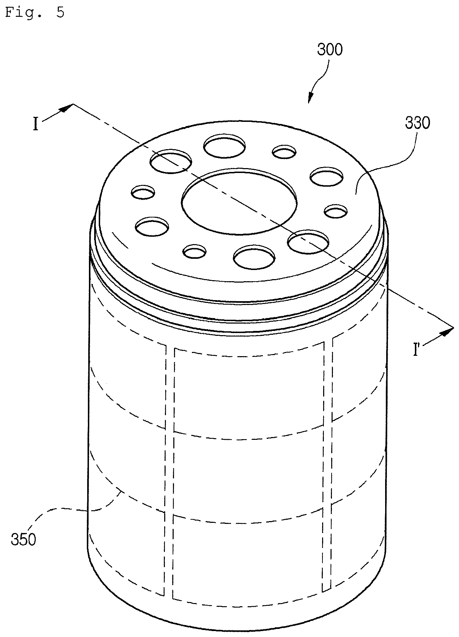

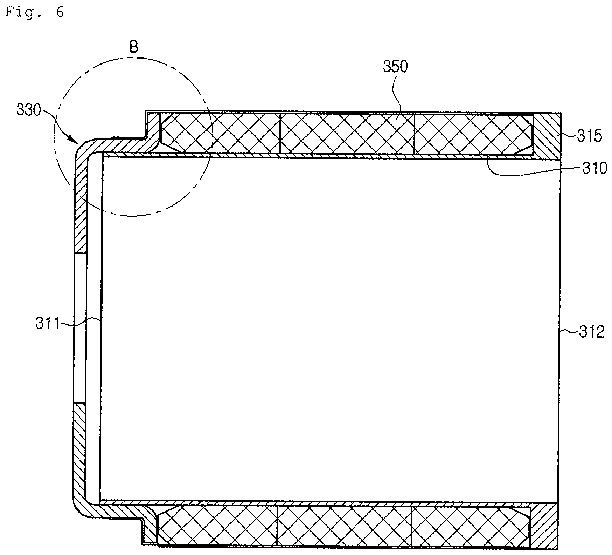

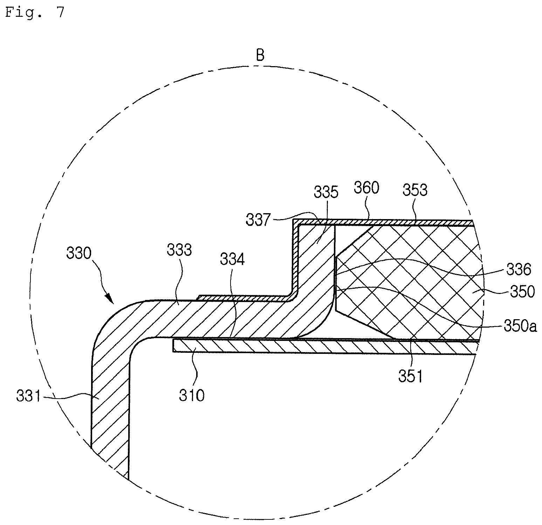

Fig. 5 is a perspective view illustrating a magnet assembly of a linear compressor according to a first embodiment, Fig. 6 is a cross-sectional view cut along a line I-I' of Fig. 5, and Fig. 7 is a cross-sectional view that a portion "B" of Fig. 6 is enlarged.

Referring to Figs. 5 to 7, the magnet assembly 300 according to the first embodiment includes a magnet frame 310 having an approximate cylinder shape and a permanent magnet 350 installed on an outer circumference of the magnet frame 310.

The inner stator 220, the cylinder 120, and the piston 130 may be disposed inside the magnet frame 310, and the outer stator 210 may be disposed outside the magnet frame 310 (See Fig. 3) .

Both end portions of the magnet frame 310 include openings 311 and 321. The openings 311 and 312 include a first opening 311 formed in one end portion of the magnet frame 310 and a second opening 312 formed in the other end portion of the magnet frame 310. For example, the one end portion may be a "top end portion" and the other end portion may be a "bottom" end portion.

The magnet frame 310 has the coupling plate 330 coupled thereto, which is coupled to the flange 134 of the piston 130. In detail, the coupling plate 330 may be coupled to the one end portion of the magnet frame 310 to cover the first opening 311.

On the outer circumference of the magnet frame 310, a supporting member 315 is provided which supports the permanent magnet 350. The supporting member 315 may be configured to abut on one end portion of the permanent magnet 350 and disposed on an outer side of the second opening 312.

In addition, the other end portion of the permanent magnet 350 is disposed to abut on the coupling plate 330. Namely, the permanent magnet 350 may be disposed contactable between the coupling plate 330 and the supporting member 315.

Finally, the permanent magnet 350 may be prevented from being detached from the magnet frame 310 by the coupling plate 330 and the supporting member 315.

Hereinafter, the configuration of the coupling plate 330 and the coupling structure with the permanent magnet 350 will be described in detail.

Referring to Fig. 7, the coupling plate 330 according to a first embodiment include a piston coupling part 331 coupled to the flange 134 of the piston 130, a side extension part 333 extending from the piston coupling part 331, and a flange part 335 disposed contactable to the permanent magnet 330.

The piston coupling part 331 is a part coupled to the flange 134 of the piston 130 and the supporter 135 and includes connection member communication holes 330a, connection member fastening holes 330b and connection member assembly holes 330c. In addition, the piston coupling part 331 may be disposed to shield the first opening 311.

The side extension part 333 is a part extending from the first opening 311 to be on the outer circumference of the magnet frame 310. The side extension part 333 extending from the first opening 311 towards the second opening 312 at an outer side of the magnet frame 310. The side extension part 333 includes a coupling surface 334 coupled to at least a part of the outer circumference of the magnet frame 310.

The flange part 335 extends in an outer radial direction from the side extension part 333. The flange part 335 includes a contact part 336 coupled to an end portion 350a of the permanent magnet 350 and an end portion 337 extending in parallel with a second surface 353 of the permanent magnet 350.

A surface passing through the end portion 337 of the flange part 335 and the second surface 353 of the permanent magnet 350 are formed inside the fixing member 360.

The contact part 336 extends to be approximately perpendicular to the outer circumference of the magnet frame 310, namely, in a radial direction. The end portion 337 extends to be perpendicular to the contact part 336, namely, back and forth.

The permanent magnet 350 includes a first surface 351 installed on the outer circumference of the magnet frame 310 and the second surface 353 extending to be opposite to the first surface 351. The first surface 351 extends in parallel with the outer circumference of the magnet frame 310 and the second surface 353 extends in parallel with the first surface 351.

Furthermore, the permanent magnet 350 includes a magnet end portion 350a coupled to the contact part 336. The magnet end portion 350a is configured to extend in a parallel direction with the contact part 336 and be contact-coupled to the contact part 336.

Since the contact part 336 of the coupling plate 330 and the magnet end portion 350a of the permanent magnet 350 are contacted and coupled, a force may be easily delivered from the permanent magnet 350 to the coupling plate 330. In addition, since the piston 130 coupled to the coupling plate 330 may reciprocate, a loss can be reduced in a power delivery process.

In addition, since a fixing member is not disposed between the coupling plate 330 and the permanent magnet 350 as in the related art (see Figs. 1 and 2), a phenomenon that the fixing member is damaged by a compressive force or a tensile force exerted between the coupling plate 330 and the permanent magnet 350 can be prevented.

In the outer side of the permanent magnet 350 and the coupling plate 330, the fixing member 360 for coupling the permanent magnet 350 and the coupling plate 330 is disposed. The fixing member 360 may be coupled to the second surface 353 of the permanent 30 to extend to the end portion 337 of the flange part 335 and the outer surface of the side extension part 333.

The fixing member 360 may be made of a mixture of a glass fiber or a carbon fiber, and a resin. In detail, the fixing member 360 includes a taping member having a predetermined tensile or compressive strength. In addition, the fixing member 360 includes a plurality of taping members and is configured to enhance the strength thereof. For example, the plurality of taping member may be disposed to form a plurality of layers.

On the other hand, a virtual straight line from which a coupling surface 334 of the side extension part 333 extends, and a virtual straight line from which the first surface 351 of the permanent magnet 350 extends may form an identical straight line. In addition, a virtual straight line from which the end portion 337 of the flange part 335 extends and a virtual straight line that the second surface 353 of the permanent magnet 350 may form an identical straight line.

In other words, a virtual surface from which the coupling surface 334 extends and a virtual surface form which the first surface 351 extends may form an identical surface. A virtual surface from which the end portion 336 extends and a virtual surface from which the second surface 353 extends may form an identical surface.

Eventually, with respect to the first and second surfaces 351 and 353 of the permanent magnet 350, both sides of the coupling plate 330, namely, the coupling surface 334 and the end portion 337 extend in parallel. Accordingly, when the tensile force is exerted between the permanent magnet 350 and the coupling plate 330, the fixing member 360 is prevented from being curved and damaged.

Hereinafter, a second embodiment is described. Compared to the first embodiment, since the second embodiment has differences in partial configuration, the differences are mainly described and description about the same parts will be referred to that of the first embodiment.

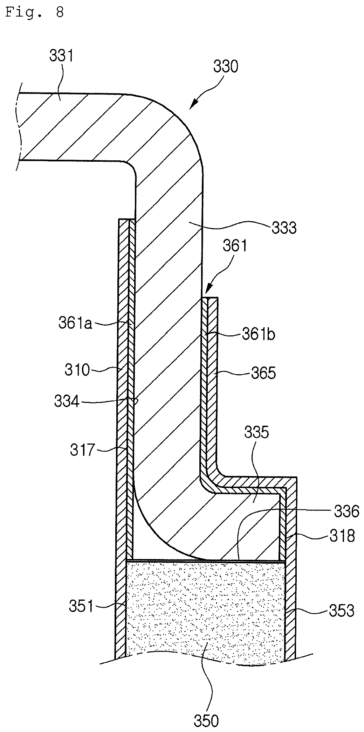

Fig. 8 is a cross sectional view illustrating a configuration of a magnet assembly according to the second embodiment.

Referring to Fig. 8, the magnet assembly 300 according to the second embodiment includes a magnet frame 310, a coupling plate 330 coupled to the magnet frame 310, a permanent magnet 350 contact-coupled to an end portion of the coupling plate 330, and a plurality of fixing members 361 and 365 for coupling the coupling plate 330 and the permanent magnet 350.

The plurality of fixing members 361 and 365 may be made of a mixture of a glass fiber or a carbon fiber, and resin, as the fixing member 360 of the first embodiment.

The plurality of fixing members 361 and 365 include a plurality of first fixing members 361 coupled to both sides of the coupling plate 330 and a second fixing member 365 coupled to an outer side of a second member 361b among the first fixing members 361 to extend to the permanent magnet 350.

The plurality of first fixing members 361 include a first member 361a coupled between the magnet frame 310 and the side extension part 333 of the coupling plate 330, and the second member 361b coupled between an outer surface of the side extension part 333 and the second fixing member 365.

That is, it is understood that the coupling surface 334 of the side extension part 333 is coupled to the magnet frame 310 by the first member 361a. In addition, it is understood that the end portion 337 of the flange part 335 is coupled to the second fixing member 365 by the second member 361b.

In brief, it may be understood that the separate first fixing member 361 is disposed on the outer sides of the side extension part 333 and the flange 335, and the magnet frame 310 and the second fixing member 365 are coupled to the outer side of the fixing member 361, as described in relation to the first embodiment.

In a surface on which the magnet frame 310 is coupled to the first member 361a, a first boundary surface 317 is formed. In addition, a second boundary surface 318 is formed in a part of the second member 361b, which is coupled to the end portion 337, and a surface to which the second fixing member 365 is coupled.

A virtual straight line (or surface) from which the first boundary surface 317 extends and a virtual straight line (or surface) from which the first surface 351 of the permanent magnet 350 extends may form an identical straight line (or surface).

In such a way, since both side surfaces of the permanent magnet 350 and both surfaces of the coupling plate 330 coupled to the permanent magnet 350, that is, the first and second boundary surfaces 317 and 318 extend in parallel, when a tensile force is exerted between the permanent magnet 350 and the coupling plate 330, the fixing members 361 and 365 are prevented from being bent and damaged.

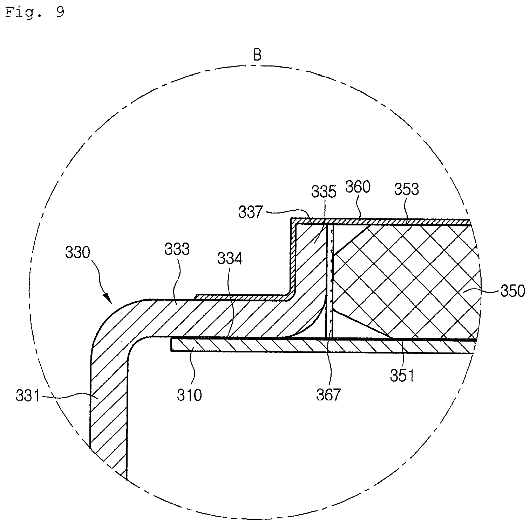

Fig. 9 is a cross-sectional view illustrating a magnet assembly according to an example not falling within the scope of the invention.

Referring to Fig. 9, the magnet assembly 300 includes a permanent magnet 350 positioned at an end portion of the coupling plate 330 and an intermediate supporting member 367 intervened between the coupling plate 330 and the permanent magnet 350 and having a plate shape.

The intermediate supporting member 367 is disposed between an end portion of the flange part 335 and the end portion 350a (see Fig. 7) of the permanent magnet 350 to be able to support the flange part 335 and the permanent magnet 350.

The intermediate supporting member 367 is coupled to the magnet frame 310 extending in an outer direction of the magnet frame 310. In addition, the intermediate supporting member 367 may be fixed by the fixing member 360. That is, one end portion of the intermediate supporting member 367 may be coupled to the magnet frame 310, and the other end portion may be coupled to the fixing member 360.

For example, the intermediate supporting member 367 is made of a metal-based material and supports the coupling plate 330 and the permanent magnet 350, while delivering a force exerted from any one of the coupling plate 330 and the permanent magnet 350 to the other.

For another example, the intermediate supporting member 367 is made of a taping-based material and may fix the coupling plate 330 and the permanent magnet 350.

As described above, since the intermediate supporting member 367 of a plate shape is installed between the permanent magnet and the end portion of the flange part and a force exerted between the permanent magnet and the coupling plate is delivered by the intermediate supporting member, the fixing member and the coupling plate are not damaged in a process that the permanent magnet and the coupling plate reciprocate from side to side.

According to embodiments, since a permanent magnet and a coupling plate are disposed to be contactable, the force exerted between the permanent magnet and the coupling plate is easy to be delivered and damage on a fixing member, which couples the permanent magnet and the coupling plate, can be preventable.

In particular, since a flange part of the coupling plate contacts with the permanent magnet and the fixing member is not disposed between the coupling plate and the permanent magnet, the damage on the fixing member by the compressive force exerted between the coupling plate and the permanent magnet can be prevented.

In addition, since both end portions of the coupling plates are disposed to be matched with or be parallel with both cross-sections of the permanent magnet, the damage on the fixing member by the tensile force exerted between the coupling plate and the permanent magnet can be prevented.

Furthermore, since the permanent magnet is made of a ferrite-based material, the magnetic flux density is smaller, compared to the ND magnet. Accordingly, the amount of the magnetic flux leaked from the permanent magnet becomes less and operation efficiency of the compressor can be improved. In addition, a manufacturing cost of the compressor can be reduced by employing a cheap ferrite-based material as the permanent magnet.

In addition, since the coupling plate is made of a nonmagnetic material, a phenomenon that the magnetic flux is delivered from the permanent magnet and leaked outside can be prevented.

Moreover, efficiency of the compressor can be improved, since the cylinder and piston are made of a nonmagnetic material, in particular, of aluminum. In addition, a phenomenon that the magnetic flux generated from a motor assembly leaks outside the cylinder can be prevented.

Although embodiments have been described with reference to a number of illustrative embodiments thereof, it should be understood that numerous other modifications and embodiments can be devised by those skilled in the art that will fall within the scope of the present invention as defined by the appended claims.

## Claims

1. A linear compressor comprising:
a shell (100) in which a refrigerant suction part (101) is disposed;
a cylinder (120) provided inside the shell;
a piston (130) configured for reciprocating inside the cylinder;
a motor assembly (200) for providing a driving force for movement of the piston; and
a magnet assembly (300) for delivering the driving force exerted by the motor assembly to the piston,
wherein the magnet assembly (300) comprises:
a magnet frame (310) having a cylinder shape;
a permanent magnet (350) installed at the magnet frame, being made of a ferrite-based material;
a coupling plate (330) coupled to one side of the magnet frame; and
a fixing member (360) coupled to the permanent magnet (350) and the coupling plate (330),
**characterized in that** the coupling plate (330) comprises:
a piston coupling part (331) coupled to the piston;
a side extension part (333) extending from the piston coupling part and laid on an outer circumference of the magnet frame (310); and
a flange part (335) extending in an outer radial direction of the magnet frame (310) from the side extension part and having a contact part (336) coupled to an end portion (350a) of the permanent magnet,
wherein the permanent magnet (350) comprises:
a first surface (351) coupled to an outer circumference of the magnet frame (310); and
a second surface (353) disposed in a direction opposite to the first surface,
wherein a surface connecting an end portion (337) of the flange part (335) and the second surface (353) of the permanent magnet (350) is provided on an inner surface of the fixing member (360),
wherein the fixing member (360) is made of a mixture of a glass fiber or a carbon fiber, and a resin.

2. The linear compressor according to claim 1, wherein the flange part (335) is bent perpendicularly in an outer radial direction of the frame from the side extension part (333).

3. The linear compressor according to claim 1 or 2, wherein the side extension part (333) comprises a coupling surface (334) coupled to the outer circumference of the magnet frame (310), and
the coupling surface (334) and the first surface (351) of the permanent magnet (350) are disposed on the outer circumference of the magnet frame (310).

4. The linear compressor according to claim 3, wherein a virtual extension of the coupling surface (334) forms an identical surface with a virtual extension of the first surface (351) of the permanent magnet (350).

5. The linear compressor according to any of claims 1 to 4, wherein a virtual extension of the end portion (337) of the flange part (335) in an axial direction forms an identical surface with a virtual extension of the second surface (353) of the permanent magnet (310).

6. The linear compressor according to any of claims 1 to 5, wherein the fixing member (360) comprises:
a plurality of first fixing members (361) coupled to both sides of the coupling plate (330); and
a second fixing member (365) coupled to at least a portion of the plurality of first fixing members (361) and the permanent magnet (350).

7. The linear compressor according to claim 6, wherein the plurality of first fixing members (361) comprises:
a first member (361a) positioned between the magnet frame (310) and the side extension part (333) of the coupling plate (330); and
a second member (361b) positioned between an outer surface of the side extension part (333) and the second fixing member (365).

8. The linear compressor according to claim 7, further comprising:
a first boundary surface (317) as a coupling surface between the first member (361a) and the magnet frame (310); and
a second boundary surface (318) as a coupling surface between the second fixing member (365) and a part of the second member (361b) coupled to the end portion (337) of the flange part(335).

## Patentansprüche

1. Linearverdichter, der aufweist:
ein Gehäuse (100), in dem ein Kältemittelsaugteil (101) angeordnet ist;
einen Zylinder (120), der im Inneren des Gehäuses bereitgestellt ist;
einen Kolben (130), der aufgebaut ist, um sich im Inneren des Zylinders hin und her zu bewegen;
eine Motoranordnung (200) zur Bereitstellung einer Antriebskraft für die Bewegung des Kolbens; und
eine Magnetanordnung (300) zum Liefern der von der Motoranordnung ausgeübten Antriebskraft an den Kolben;
wobei die Magnetanordnung (300) aufweist:
einen Magnetrahmen (310) mit einer Zylinderform;
einen Permanentmagneten (350), der an dem Magnetrahmen installiert ist, der aus einem Material auf Ferritbasis hergestellt ist;
eine Kopplungsplatte (330), die mit einer Seite des Magnetrahmens gekoppelt ist; und
ein Befestigungselement (360), das mit dem Permanentmagneten (350) und der Kopplungsplatte (330) gekoppelt ist,
**dadurch gekennzeichnet, dass** die Kopplungsplatte (330) aufweist:
einen Kolbenkopplungsteil (331), der mit dem Kolben gekoppelt ist;
einen seitlichen Erstreckungsteil (333), der sich von dem Kolbenkopplungsteil erstreckt und auf einem Außenumfang des Magnetrahmens (310) aufliegt; und
einen Flanschteil (335), der sich von dem seitlichen Erstreckungsteil in einer äußeren Radialrichtung des Magnetrahmens (310) erstreckt und einen Kontaktteil (336) hat, der mit einem Endabschnitt (350a) des Permanentmagneten gekoppelt ist,
wobei der Permanentmagnet (350) aufweist:
eine erste Oberfläche (351), die mit einem Außenumfang des Magnetrahmens (310) gekoppelt ist; und
eine zweite Oberfläche (353), die in einer zu der ersten Oberfläche entgegengesetzten Richtung angeordnet ist,
wobei eine Oberfläche, die einen Endabschnitt (337) des Flanschteils (335) und die zweite Oberfläche (353) des Permanentmagneten (350) verbindet, auf einer Innenoberfläche des Befestigungselements (360) bereitgestellt ist,
wobei das Befestigungselement (360) aus einer Mischung einer Glasfaser oder einer Carbonfaser und einem Harz hergestellt ist.

2. Linearverdichter nach Anspruch 1, wobei der Flanschteil (335) von dem seitlichen Erstreckungsteil (333) in einer äußeren Radialrichtung des Rahmens senkrecht gekrümmt ist.

3. Linearverdichter nach Anspruch 1 oder 2, wobei der seitliche Erstreckungsteil (333) eine Kopplungsoberfläche (334) aufweist, die mit dem Außenumfang des Magnetrahmens (310) gekoppelt ist, und
wobei die Kopplungsoberfläche (334) und die erste Oberfläche (351) des Permanentmagneten (350) auf dem Außenumfang des Magnetrahmens (310) angeordnet sind.

4. Linearverdichter nach Anspruch 3, wobei eine virtuelle Verlängerung der Kopplungsoberfläche (334) eine mit einer virtuellen Verlängerung der ersten Oberfläche (351) des Permanentmagneten (350) identische Oberfläche bildet.

5. Linearverdichter nach einem der Ansprüche 1 bis 4, wobei eine virtuelle Verlängerung des Endabschnitts (337) des Flanschteils (335) in einer Axialrichtung eine mit einer virtuellen Verlängerung der zweiten Oberfläche (353) des Permanentmagneten (310) identische Oberfläche bildet.

6. Linearverdichter nach einem der Ansprüche 1 bis 5, wobei das Befestigungselement (360) aufweist:
mehrere erste Befestigungselemente (361), die mit beiden Seiten der Kopplungsplatte (330) gekoppelt sind; und
ein zweites Befestigungselement (365), das wenigstens mit einem Abschnitt der mehreren ersten Befestigungselemente (361) und dem Permanentmagneten (350) gekoppelt ist.

7. Linearverdichter nach Anspruch 6, wobei die mehreren ersten Befestigungselemente (361) aufweisen:
ein erstes Element (361a), das zwischen dem Magnetrahmen (310) und dem seitlichen Erstreckungsteil (333) der Kopplungsplatte (330) positioniert ist; und
ein zweites Element (361b), das zwischen einer Außenoberfläche des seitlichen Erstreckungsteils (333) und dem zweiten Befestigungselement (365) positioniert ist.

8. Linearverdichter nach Anspruch 7, der ferner aufweist:
eine erste Grenzoberfläche (317) als eine Kopplungsoberfläche zwischen dem ersten Element (361a) und dem Magnetrahmen (310); und
eine zweite Grenzoberfläche (318) als eine Kopplungsoberfläche zwischen dem zweiten Befestigungselement (365) und einem Teil des zweiten Elements (361b), der mit dem Endabschnitt (337) des Flanschteils (335) gekoppelt ist.

## Revendications

1. Compresseur linéaire comprenant :
une enveloppe (100) dans laquelle une partie d'aspiration de réfrigérant (101) est disposée ;
un cylindre (120) fourni à l'intérieur de l'enveloppe ;
un piston (130) configuré pour aller et venir à l'intérieur du cylindre ;
un ensemble moteur (200) pour fournir une force d'entraînement pour le mouvement du piston ; et
un ensemble aimant (300) pour distribuer la force d'entraînement exercée par l'ensemble moteur au piston,
dans lequel l'ensemble aimant (300) comprend :
un cadre d'aimant (310) ayant une forme de cylindre ;
un aimant permanent (350) installé sur le cadre d'aimant, constitué d'un matériau à base de ferrite ;
une plaque de couplage (330) couplée sur un côté du cadre d'aimant ; et
un élément de fixation (360) couplé à l'aimant permanent (350) et à la plaque de couplage (330),
**caractérisé en ce que** la plaque de couplage (330) comprend :
une partie de couplage de piston (331) couplée au piston ;
une partie d'extension latérale (333) s'étendant à partir de la partie de couplage de piston et placée sur une circonférence externe du cadre d'aimant (310) ; et
une partie de bride (335) s'étendant dans une direction radiale externe du cadre d'aimant (310) à partir de la partie d'extension latérale et ayant une partie de contact (336) couplée à une portion d'extrémité (350a) de l'aimant permanent,
dans lequel l'aimant permanent (350) comprend :
une première surface (351) couplée à une circonférence externe du cadre d'aimant (310) ; et
une seconde surface (353) disposée dans une direction opposée à la première surface, dans lequel une surface reliant une portion d'extrémité (337) de la partie de bride (335) et la seconde surface (353) de l'aimant permanent (350) est fournie sur une surface interne de l'élément de fixation (360),
dans lequel l'élément de fixation (360) est constitué d'un mélange d'une fibre de verre ou d'une fibre de carbone, et d'une résine.

2. Compresseur linéaire selon la revendication 1, dans lequel la partie de bride (335) est perpendiculairement incurvée dans une direction radiale externe du cadre à partir de la partie d'extension latérale (333).

3. Compresseur linéaire selon la revendication 1 ou 2, dans lequel la partie d'extension latérale (333) comprend une surface de couplage (334) couplée à la circonférence externe du cadre d'aimant (310), et
la surface de couplage (334) et la première surface (351) de l'aimant permanent (350) sont disposées sur la circonférence externe du cadre d'aimant (310).

4. Compresseur linéaire selon la revendication 3, dans lequel une extension virtuelle de la surface de couplage (334) forme une surface identique avec une extension virtuelle de la première surface (351) de l'aimant permanent (350).

5. Compresseur linéaire selon l'une quelconque des revendications 1 à 4, dans lequel une extension virtuelle de la portion d'extrémité (337) de la partie de bride (335) dans une direction axiale forme une surface identique à une extension virtuelle de la seconde surface (353) de l'aimant permanent (310).

6. Compresseur linéaire selon l'une quelconque des revendications 1 à 5, dans lequel l'élément de fixation (360) comprend :
une pluralité de premiers éléments de fixation (361) couplés aux deux côtés de la plaque de couplage (330) ; et
un second élément de fixation (365) couplé à au moins une portion de la pluralité de premiers éléments de fixation (361) et à l'aimant permanent (350).

7. Compresseur linéaire selon la revendication 6, dans lequel la pluralité de premiers éléments de fixation (361) comprend :
un premier élément (361a) positionné entre le cadre d'aimant (310) et la partie d'extension latérale (333) de la plaque de couplage (330) ; et
un second élément (361b) positionné entre une surface externe de la partie d'extension latérale (333) et le second élément de fixation (365).

8. Compresseur linéaire selon la revendication 7, comprenant en outre :
une première surface de délimitation (317) en tant que surface de couplage entre le premier élément (361a) et le cadre d'aimant (310) ; et
une seconde surface de délimitation (318) en tant que surface de couplage entre le second élément de fixation (365) et une partie du second élément (361b) couplée à la partie d'extrémité (337) de la partie de bride (335).
